# NEUE EUROPÄISCHE PATENTSCHRIFT

(11) **EP 0 853 541 B2**
(45) Veröffentlichungstag und Bekanntmachung des Hinweises auf die Entscheidung über den Einspruch: **09.04.2008**
(45) Hinweis auf die Patenterteilung: 12.04.2000
(21) Anmeldenummer: 96932372.4
(22) Anmeldetag: 04.10.1996
(51) Int. Cl.: B29C 45/52, B29C 45/60, C23C 26/02

(54) **RÜCKSTROMSPERRE FÜR EINE SPRITZEINHEIT EINER SPRITZGIESSMASCHINE**
RETURN FLOW SHUT-OFF DEVICE FOR AN INJECTION UNIT IN AN INJECTING MOULDING MACHINE
DISPOSITIF DE BLOCAGE DU REFLUX POUR UNE UNITE D'INJECTION D'UNE MACHINE A MOULER PAR INJECTION

(30) Priorität: 04.10.1995 AT 163995
(43) Veröffentlichungstag der Anmeldung: 22.07.1998
(73) Patentinhaber: ENGEL AUSTRIA GmbH, 4311 Schwertberg (AT)
(72) Erfinder: URBANEK, Otto, A-4020 Linz (AT); BALDINGER, Peter, A-4470 Enns (AT); EBNER, Reinhold, A-8793 Trofaiach (AT); PITSCHENDER, Walther, A-8770 St. Michael (AT); BRANDSTÄTTER, Elmar, A-8700 Leoben (AT)
(74) Vertreter: Torggler, Paul Norbert
(86) Internationale Anmeldenummer: PCT/AT1996/000184
(87) Internationale Veröffentlichungsnummer: WO 1997/012743

(56) Entgegenhaltungen:
- EP-A- 0 498 286
- EP-A- 0 592 309
- DE-A- 3 936 479
- DE-A- 4 106 227
- US-A- 5 167 971
- Härterei-Technische Mitteilungen-HTM, Bd 47 (1992), Heft, S. 137-146
- R.Ebner et al. : Laser Alloyed High Speed Steels, S. 187-192, edited by B.L. Mordike, "Laser Treatment of Materials", ISBN 3-88355-185-6, Papers, presented at the European Conference on Laser Treatment of Meterials, 1992 (ECLAT 92)
- Verschleissschutz durch Pulverflammspritzen, Instandhaltung 1980, Heft 4, S- 17-19
- Stahl-Eisen-Liste, 9. Auflage, 1994
- Plastverarbeiter, 46. Jahrgang (1995), Heft 6
- Der Maschinenmarkt, Band 100, (1994), Heft 7, S- 28-31
- Werkstoffe ds Maschinen-, Anlagen- und Apparatebaus, 4. Auflage, 1991
- Werkstoffe für die Fertigungstechnik, Werkstoffwoche 96, Symp. 5 (1996), Band 5
- SEW 400, 6. Ausgabe 1991
- A. Gasser : "Oberflächenbehandlung metallischer Werkstoffe mit CO2-Laserstrahlung in der flüssigen Phase", 1.Auflage 1993

## Beschreibung

Die Erfindung bezieht sich auf eine Rückstromsperre für eine Spritzeinheit einer Spritzgießmaschine mit einem Schneckenzylinder mit einer Plastifizierschnecke, bei deren vorderen Ende die Rückstromsperre, bestehend aus einer Schneckenspitze einer Sperrbüchse und einer Sperrhülse mit korrespondierenden Dicht- und Reibflächen angeordnet ist, wobei mindestens ein Teil von mindestens einer Reibfläche der Schneckenspitze, der Sperrbüchse und/oder der Sperrhülse von einer Schutzschicht aus einer schmelzmetallurgischen Verbindung zwischen dem jeweiligen Grundkörper und einem zugeführten oder vordeponierten Zusatzwerkstoff gebildet wird.

Weiters bezieht sich die Erfindung auf ein Verfahren zur Herstellung einer solchen Rückstromsperre.

Derartige Rückstromsperren verhindern ein Rückströmen eines Teiles der Kunststoffmasse während des Spritzgießvorganges. Ein Beispiel einer Rückstromsperre ist in der EU-B1-0 212 224 beschrieben.

Derartige Rückstromsperren unterliegen hohen Abrieb- und Korrosionsbeanspruchungen. Es ist bekannt, einzelne Teile der Rückstromsperre an den Reibflächen mit einer Hartstoffschichte zu versehen. Nach dem bekannten Stand der Technik werden bei der Behandlung der einzelnen Teile einer Rückstromsperre diverse Beschichtungsverfahren, wie Flammspritzen, Hochgeschwindigkeitsflammspritzen, Plasmaspritzen. Detonationasspritzen, PVD, CVD mit oder ohne nachfolgender Wärmebehandlung eingesetzt. Weiters kamen Schweißverfahren, beispielsweise PTA-Schweißen, WIG Schweißen zum Einsatz.

Die bekannten Beschichtungen haben relativ dünne Verschleißschutzbereiche (vom um Bereich bei CVD und PVD bis zu einigen 1/10mm-Schichtstärken bei diversen Spritztechniken.

Sämtliche bekannte Beschichtungen haben ein wesentlich unterschiedliches Normalpotential gegenüber dem Grundkörper, was in korrosiver Hinsicht ungünstig ist, wenn ein nichtbeschichteter Bereich eine Kontaktfläche zu einem beschichteten Bereich aufweist und es zur Einwirkung eines korrosiv wirkenden Mediums kommt.

Beschichtungen haben immer, selbst wenn diese durch eine Wärmebehandlung eingesintert wurden, eine relativ spröde Kontaktzone, welche bei grober mechanischer Handhabung zu Problemen führen kann. So kommt es beispielsweise zu Ausbrüchen, Rissen und dergleichen.

Die US-PS 5,167,971 beschreibt die Beschichtung der Sperrflächen einer Rückstromsperre, um deren Reibungsbeständigkeit zu erhöhen. Typische Verfahren zur Herstellung von Beschichtungen, welche gemäß dem US-Patent in Frage kommen, sind zur Gruppe der thermischen Spritzverfahren zu zählen. Beim Beschichtungsvorgang wird ein pulverförmiger Zusatzwerkstoff mittels einer Brennflamme angeschmolzen und mit hoher kinetischer Energie auf den Grundkörper geschossen. Der Grundkörper wird beim Beschichtungsvorgang nicht aufgeschmolzen. Der aufgetragene Zusatzwerkstoff liegt somit in reiner Form und ohne Aufmischung mit dem Grundkörper vor. Die Oberflächeneigenschaften werden vollkommen durch den Beschichtungswerkstoff bestimmt.

Die EP-A1 0 498 286 beschreibt eine Methode zur Herstellung einer Verschleißschutzschichte auf der Oberfläche von Schneckenstegen. Es wird darin eine Laserbeschichtung mit einer Mo-Basislegierung als Beschichtungswerkstoff beschrieben. Beim beschriebenen Verfahren wird der Beschichtungswerkstoff derart auf den Grundkörper aufgetragen, daß das Beschichtungsmaterial möglichst wenig vom Grundmaterial durchmischt wird.

Schweißverfahren werden nach dem bekannten Stand der Technik primär für Auftragsschweißungen eingesetzt. z.B. PTA-Schweißen = Plasmapulverauftragsschweißen. Dabei brennt ein Lichtbogen zwischen einer Wolframelektrode und dem Werkstück. Der Zusatzwerkstoff wird meistens in Pulverform eingebracht. Der Nachteil dieses Verfahrens ist darin zu sehen, daß es zu einer unzureichend definierten Aufmischung zwischen dem Zusatzwerkstoff und dem Grundmaterial kommt. Spezielle Gefüge sind somit nicht einstellbar. Weiters ist die Rißanfälligkeit in der Panzerung durch die unterschiedliche thermische Dehnung des Auftragswerkstoffes und des Grundkörpers hoch.
Weitere Probleme stellen der Prozeß-Start und der Prozeß-Stop bei herkömmlichen Schweißverfahren dar.

Die bekannten Rückstromsperren dieser Art können somit hinsichtlich ihrer Lebensdauer nicht vollständig befriedigen. Es ist daher Aufgabe der Erfindung, eine Rückstromsperre und ein Verfahren zur Bearbeitung der einzelnen Grundkörper der Teile einer Rückstromsperre der eingangs erwähnten Art dahingehend zu verbessern, daß die Lebensdauer der Rückstromsperre maßgeblich erhöht wird, indem ein für diesen Bauteil besonders geeignetes Werkstoffsystem und ein Verfahren zu dessen Herstellung realisiert wird.

Die erfindungsgemäße Aufgabe wird dadurch gelöst, daß mindestens der Grundkörper der Schneckenspitze aus einem chromhältigen Stahlwerkstoff mit mindestens 12% Chromanteil besteht und mindestens an einem Teil der Reibflächen der Schneckenspitze Zusatzwerkstoffe wie Metalle, Carbide, Carbonitride, Boride, Carboboride, Silizide, Sulfide und/oder Oxide vorzugsweise von Verbindungen Mo, Ti, Cr, Ni, Co, Nb, V, Al, Ta, W, Zr, Hf, Fe, Mn, Ca, Si, B, C und N, einzeln oder in Kombination eingeschmolzen sind, wobei sich zwischen dem Grundkörper und der mit den Zusatzwerkstoffen behandelten Randzone eine Mischzone befindet, die dünner als die mit den Zusatzwerkstoffen behandelten Randzone ist und beide Zonen aus dem Grundkörperwerkstoff sowie gezielten Anteilen der Zusatzstoffe bestehen und daß diese beiden Zonen aus metallischen Mischkristallen und chemischen Verbindungen, vorzugsweise Karbiden der Typen MC₁₋ₓ, M₂C, M₆C, M₇C₃ und Boriden der Typen M2B und M6B aufgebaut sind, die Stoffe des Grundkörpers und/oder der Zusatzwerkstoffe enthalten, wobei die angeführten Phasen in der Ranazone und der Mischzone in definierten Konzentrationsverhältnissen eingestellt sind.

Die hergestellte Schutzschichte weist einen oder mehrere direkt und/oder eutektisch aus der Schmelze ausgeschiedene Karbidtypen, Nitridtypen, Carbonnitridtypen, Boridtypen, Carboboridtypen bzw. Oxidtypen, insbesondere extrem harte Monokarbide aber auch andere harte und verschleißbeständige Sonderkarbide, auf und zusätzlich eine oder mehrere Komponenten aus metallischen Mischkristallen. Vorzugsweise tritt mindestens eine der nachfolgenden Gefügeelement in der Schutzschichte auf:
- MC direkt aus der Schmelze
- MC - Ferrit oder Austenit Eutektikum (Austenit wird hinsichtlich seiner Zusammensetzung so eingestellt, daß er je nach Anforderung bis Raumtemperatur erhalten bleibt, teilweise in Martensit umwandelt bzw. vollständig in Martensit umwandelt).
- M₇C₃- Austenit oder Ferrit Eutektikum (Austenit wird hinsichtlich seiner Zusammensetzung so eingestellt, daß er je nach Anforderung bis Raumtemperatur erhalten bleibt, teilweise in Martensit umwandelt bzw. vollständig in Martensit umwandelt). In besonderen Fällen werden noch weitere Phasenumwandlungen, z.B. peritektische Phasenumwandlungen, gezielt eingesetzt um optimale Gefügezustände einzustellen.

Das erfindungsgemäße Verfahren, bei dem auf den Reibflächen der Schneckenspitze und/oder den Reib- oder Dichtflächen der Sperrbüchse und/oder der Sperrhülse metallische, hartmetallische oder keramische Randschichten erzeugt werden, die von einer schmelzmetallurgischen Verbindung zwischen dem jeweiligen Grundkörper und einem zugeführten oder vordeponierten Zusatzwerkstoff gebildet werden, sieht vor, daß ein Grundkörper aus Stahlwerkstoff mit mindestens 12% Chromanteil, einer Zugfestigkeit von mindestens 800 N/mm² und einer Kerbschlagarbeit von mindestens 50 Joule bei 20°C (Charpy V-Probe) eingesetzt wird, daß die zu bearbeitende Fläche mittels einer Energiequelle mit einer auf den Grundkörper einwirkenden örtlich-mittleren Leistungsdichte von mehr als 10³ Watt/cm² lokal aufgeschmolzen wird, wobei die maximale Schmelzbadspitzentemperatur mindestens 1700°C beträgt und Volumselemente in jenen Zonen des Grundkörpers, welche am fertigen Teil Reib- oder Dichtflächen bilden, kürzer als 20 Sec. im schmelzflüssigen Zustand sind und während dieser Zeit im Schmelzbad hochschmelzende Zusatzstoffe oder Mischungen von hochschmelzenden Zusatzstoffen weitgehend homogen verteilt werden, sodaß sich in der nachfolgenden Phase der Erstarrung eine Randschichte mit feinverteilten Hartstoffen bildet.

Beim erfindungsgemäßen Verfahren werden die Gefügebestandteile in der Mischzone und der Randschichte gezielt in Größe und Zusammensetzung eingestellt, weiters werden die Gefügeänderungen im wärmebeeinflußten Bereich des Grundkörpers so kontrolliert, daß keine negativen Auswirkungen hinsichtlich des Korrosionsverhaltens und der Festigkeit des Verbundes auftreten. Das Zusatzmaterial wird nicht auf den Grundkörper aufgetragen, sondern in diesen eingeschmolzen. Vorzugsweise werden Hochleistungstrahlungsquellen, insbesondere Laser, eingesetzt.

Vorzugsweise ist vorgesehen, daß die Grundkörper der Schneckenspitze, der Sperrbüchse und/oder der Sperrhülse aus Eisenbasiswerkstoffen bestehen und zwar in den Zusammensetzungen 1.2316 (X36 CrMo 17), 1.2085 (X33 CrS 16), 1.2361 (X91 CrMoV 18), 1.4104 (X14 CrMoS 17), 1.4105 (X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1), und daß als Zusatzwerkstoffe an den Dicht- und/oder Reibflächen, der Schneckenspitze, der Sperrhülse und/oder der Sperrbüchse Metalle ,Carbide, Nitride, Carbonitride, Boride, Sulfide, Silizide und/oder Oxide einzeln oder in Kombination eingeschmolzen werden, vorzugsweise Mo, Ti, Cr. Ni, Co, Nb, V, Al, Ta, W, Zr, Hf, Fe, Mn, Ca, B, C, N, Si und deren o.a. Verbindungen.

Nachfolgend werden Ausführungsbeispiele der Erfindung anhand der Figuren der Zeichnungen beschrieben.

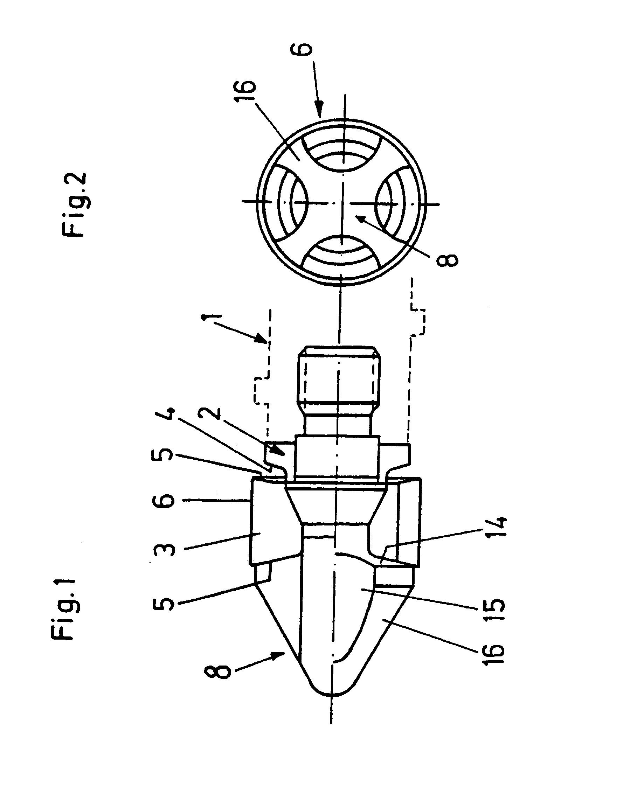

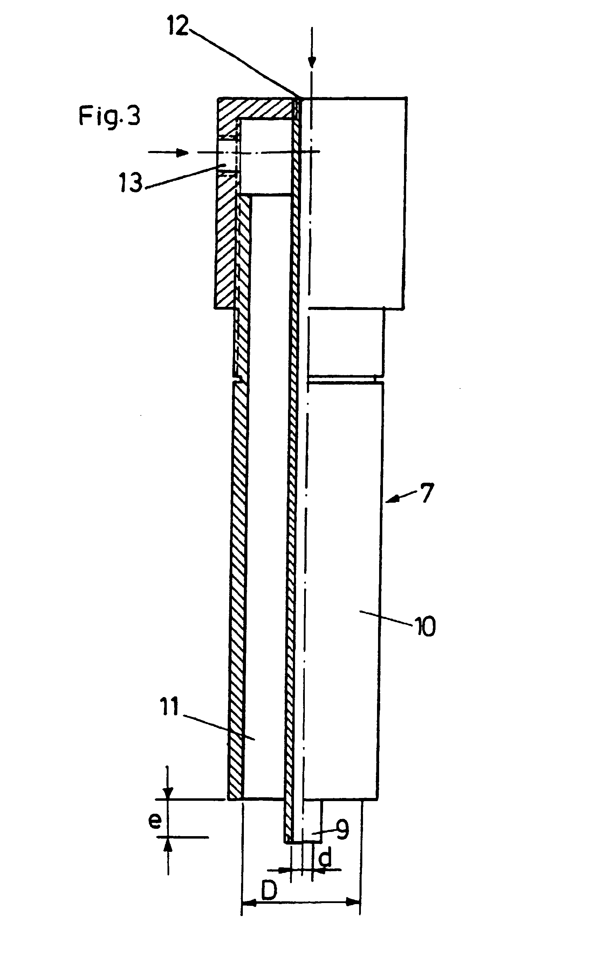

Die Fig. 1 zeigt einen Längsschnitt durch eine erfindungsgemäße Rückstromsperre, die Fig. 2 zeigt eine Draufsicht auf die Rückstromsperre und die Fig. 3 zeigt eine Seitenansicht teilweise im Schnitt einer Düse, die zum Zuführen des Beschichtungsmaterials während der Laserbehandlung dient.

Die erfindungsgemäße Rückstromsperre ist am vorderen Ende einer Plastifizierschnecke 1 montiert, die in einem Spritzzylinder bewegbar ist. Die Plastifizierschnecke 1 übt im Plastifizierzylinder einerseits eine Drehbewegung und andererseits eine axiale Bewegung aus.

Die Rückstromsperre besteht aus einer unmittelbar an der Plastifizierschnecke 1 montierten Schneckenspitze 8, einer Sperrhülse 2 und einer Sperrbüchse 3. Die Sperrbüchse 3 ist in einem gewissen Bereich auf der Schneckenspitze 8 frei bewegbar.

Sämtliche Dicht- und Reibflächen 4, 5, 6, 14 der Grundkörper der Schneckenspitze 8, der Sperrbüchse 3 und der Sperrhülse 2 sind erfindungsgemäß mittels eines Laserstrahles behandelt worden, wobei die Oberflächen der Schneckenspitze 8, der Sperrhülse 2 und der Sperrbüchse 3 im Bearbeitungsbereich aufgeschmolzen wurden und ein zugeführter oder auf den Reibflächen 4,5,14 vordeponierter Zusatzwerkstoff eine schmelzmetallurgische Verbindung mit dem jeweiligen Grundkörper der Sperrhülse 2, der Sperrbüchse 3 bzw. der Schneckenspitze 8 eingegangen ist.

Während des Einschmelzens der Zusatzwertstoffe wurde der Laserstrahl derart eingestellt, daß er in einem Winkel von 30-90° zur Werkstückoberfläche gerichtet war. Der zur Einfallsebene parallel polarisierte Anteil des Laserstrahles betrug mehr als 60%.

Die Laserleistung ist beispielsweise durch optische Instrumente, Schwingspiegel, deformierbare Optiken, Integrationsoptiken, Verwendung mehrerer Laserstrahlen, flache Auftriffwinkel gezielt einstellbar.

Während des Legierungsvorganges ist eine Relativbewegung zwischen der jeweiligen Reibfläche 4,5,14 bzw. Dichtfläche 6 und dem Laserstrahl notwendig. Diese Relativbewegung kann entweder durch einen feststehenden Laserstrahl und ein sich bewegendes Werkstück, durch einen bewegten Laserstrahl und ein feststehendes Werkstück oder durch eine vorzugsweise gegenläufige Bewegung von Werkstück und Laserstrahl erzielt werden.

Der Legierungsvorgang kann dadurch unterstützt werden, daß die Schneckenspitze 8 die Sperrhülse 2 und/oder die Sperrbüchse 3 durch andere Wärmequellen während der Laserbehandlung oder unmittelbar vor oder nach der Behandlung beheizt werden.

Die Grundkörper der Schneckenspitze 8, der Sperrhülse 2 und der Sperrbüchse 3 bestehen erfindungsgemäß aus Eisenbasiswerkstoffen, wobei schmelzmetallurgische und pulvermetallurgische Stähle vorzugsweise in den Zusammensetzungen 1.2316 (X36 CrMo 17), 1.2085 (X33 CrS 16), 1.2361 (X91 CrMoV 18), 1.4104 (X14 CrMoS 17), (X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1) eingesetzt wurden.

In einem weiteren Ausführungsbeispiel der Erfindung ist vorgesehen, daß die Grundkörper der Schneckenspitze 8 die Sperrhülse 2 und die Sperrbüchse 3 aus schmelz- bzw. pulvermetallurgischen Kobalbasis- oder Nickelbasiswerkstoffen oder aus keramischen Werkstoffen bestehen.

Als Zusatzwerkstoffe für die Bearbeitung der Reibflächen 4,5,14 bzw. der Dichtfläche 6 wurden Metalle, Carbide, Nitride, Carbonitride, Boride, Sulfide und/oder Oxide einzeln oder in Kombination eingesetzt, vorzugsweise Mo, Ti, Cr, Ni, Co, Nb, V, Al, Ta, W, Zr, Hf, Fe, Mn, Ca, B, C, N, Si und deren o.a. Verbindungen. Weiters wurden Substanzen, welche Schwefel. Sauerstoff, Selen oder Tellur enthalten, auf den Reibflächen 4, 5 bzw. der Dichtfläche 6 vordeponiert und/oder während der Laserbehandlung diesen Flächen zugeführt.

Bei einem konkreten Ausführungsbeispiel wurden folgende Grundkörper eingesetzt:

Schneckenspitze 8: Grundkörper aus vergütetem Stahl 1.2316.05 (X36 CrMo 17 V); Sperrbüchse 3: Grundkörper aus Stahl 1.2379 (X155 Cr V Mo 12 1); Sperrhülse 2 Grundkörper aus Stahl 1.4528 (X105 Cr Co Mo 18 2)

Als Zusatzwerkstoff wurde Vanadiumcarbid in Pulverform dem Schmelzbad zugeführt und dieses dabei mit Schutzgas umspült.

Das Aufschmelzen des Grundkörpers erfolgte mittels Laserstrahlen, dabei wurden Zusatzwerkstoffe in mehreren Ringen eingeschmolzen.

Nach dem Erstarren der Schutzschichte erfolgte eine spanabhebende Bearbeitung der Grundkörper. Im Falle der Schneckenspitze 8 wurden seitliche Ausnehmungen 15, welche die Durchströmquerschnitte zwischen den Flügeln 16 der Schneckenspitze 8 ergeben, durch mechanische Bearbeitung, vorzugsweise durch Fräsen, Schleifen und/oder Drehen ausgearbeitet. Durch die mechanische Bearbeitung wurde eine Härtesteigerung bis 300HV ohne zusätzliche Wärmebehandlung erzielt.

Die Härte der Reibfläche 14 der Schneckenspitze 8 entwickelte sich wie folgt:
Rohling: 250 HV-340 HV
Nach Aufbringen der Legierung 600 HV-750 HV.
Fertigteil nach der spanabhebenden Bearbeitung: 750 HV-900 HV
(HV = Vickershärte)

Die Zuführung des Zusatzwerkstoffes erfolgte in der Form von Pulver, welches den Reibflächen 4, 5, 14 und der Dichtfläche 6 während der Laserbehandlung zugeführt wurde. Der Zusatzwerkstoff kann auch in der Form von Massivdraht, Fülldraht, Paste oder Band oder in kombinierter Weise als Pulver, Massivdraht, Fülldraht, Band oder Paste zugeführt werden und er kann auch vor der Laserbehandlung auf den Reibflächen 4, 5, 14 und der Dichtfläche 6 vordeponiert werden.

Der Einschmelzprozeß erfolgt unter einer vorbestimmten Atmosphäre, indem die Schneckenspitze 8, die Sperrbüchse 3 oder die Sperrhülse 2 entweder in einer von der Umgebungsatmosphäre abgeschlossenen Kammer bearbeitet wird, oder indem diese Teile sich zwar in Umgebungsatmosphäre befinden, jedoch von einem oder mehreren Gasstrahlen in ausgewählter Zusammensetzung angeströmt werden.

Für das zuletzt genannte Verfahren eignet sich die in der Fig. 3 gezeigte Düse 7, die ein inneres Rohr 9 und ein äußeres Rohr 10 aufweist.

Durch das innere Rohr 9 werden das pulverförmige Beschichtungsmaterial und ein Gas, vorzugsweise Argon, den zu bearbeitenden Reibflächen 4, 5, 14 bzw. der Dichtfläche 6 zugeführt.

Der Zwischenraum 11 zwischen dem inneren Rohr 9 und dem äußeren Rohr 10 dient zur Zuführung eines Gasstrahles, der die Umgebungsatmosphäre für das Schmelzbad bestimmt. Im Ausführungsbeispiel wurde den zu beschichtenden Flächen Stickstoff (N₂) durch den Zwischenraum zugeführt.

Im Ausführungsbeispiel ragt das innere Rohr 9 aus dem äußeren Rohr 10 hervor. Der Abstand e des vorderen Rohrendes des Innenrohres 9 zum vorderen Rohrende des Außenrohres 10 beträgt zwischen -20 mm und +20 mm. Der Durchmesser des Innenrohres 9 liegt zwischen 2 mm und 6 mm und der Durchmesser D des Außenrohres 10 zwischen 8 mm und 30 mm.

## Patentansprüche

1. Rückstromsperre für eine Spritzeinheit einer Spritzgießmaschine mit einem Schneckenzylinder mit einer Plastifizierschnecke (1), bei deren vorderen Ende die Rückstromsperre, bestehend aus einer Schneckenspitze (8) einer Sperrbüchse (3) und einer Sperrhülse (2) mit korrespondierenden Dicht- und Reibflächen (4, 5, 6, 14) angeordnet ist, wobei mindestens ein Teil von mindestens einer Reibfläche (4, 5, 14) der Schneckenspitze (8), der Sperrbüchse (3) und/oder der Sperrhülse (2) von einer Schutzschicht aus einer schmelzmetallurgischen Verbindung zwischen dem jeweiligen Grundkörper und einem zugeführten oder vordeponierten Zusatzwerkstoff gebildet wird, **dadurch gekennzeichnet, daß** mindestens der Grundkörper der Schneckenspitze (8) aus einem chromhältigen Stahlwerkstoff mit mindestens 12% Chromanteil besteht und mindestens an den Reibflächen (14) der Schneckenspitze (8) Zusatzwerkstoffe wie Metalle, Carbide, Carbonitride, Boride, Carboboride, Silizide, Sulfide und/oder Oxide, vorzugsweise Verbindungen von Mo, Ti, Cr, Ni, Co, Nb, V, Al, Ta, W, Zr, Hf, Fe, Mn, Ca, Si, B, C und N, einzeln oder in Kombination eingeschmolzen sind, wobei sich zwischen dem Grundkörper und der mit den Zusatzwerkstoffen behandelten Randzone eine Mischzone befindet, die dünner als die mit den Zusatzwerkstoffen behandelten Randzone ist und beide Zonen aus dem Grundkörperwerkstoff sowie gezielten Anteilen der Zusatzstoffe bestehen, und daß diese beiden Zonen aus metallischen Mischkristallen und chemischen Verbindungen, vorzugsweise Karbiden der Typen MC₁₋ₓ, M₂C, M₆C, M₇C₃ und Boriden der Typen M₂B und M₆B aufgebaut sind, die Stoffe des Grundkörpers und/oder der Zusatzwerkstoffe enthalten, wobei die angeführten Phasen in der Randzone und der Mischzone in definierten Konzentrationsverhältnissen eingestellt sind.

2. Rückstromsperre nach Anspruch 1, **dadurch gekennzeichnet, daß** die Grundkörper der Schneckenspitze (8), und/oder der Sperrbüchse (3) und/oder der Sperrhülse (2) aus Eisenbasiswerkstoffen bestehen, vorzugsweise in den Zusammensetzungen 1.2316 (X36 CrMo 17), 1.2085 (X33 CrS 16), 1.2361 (X91 CrMoV 18), 1.4104 (X14 CrMoS 17), 1.4105 (X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 2041).

3. Rückstromsperre nach Anspruch 1, **dadurch gekennzeichnet, daß** die Grundkörper der Schneckenspitze (8), der Sperrbüchse (3) und/oder der Sperrhülse (2) aus schmelz- bzw. pulvermetallurgischen Kobaltbasis- oder Nickelbasiswerkstoffen bestehen.

4. Rückstromsperre nach Anspruch 1, **dadurch gekennzeichnet, daß** die Grundkörper der Sperrbüchse (3) und/oder der Sperrhülse (2) aus keramischen oder hartmetallischen Werkstoffen bestehen.

5. Rückstromsperre nach Anspruch 1 bis 5, **dadurch gekennzeichnet, daß** Zusatzwerkstoffe wie Metalle, Carbide, Carbonitride, Boride, Carboboride, Silizide, Sulfide und/oder Oxide (vorzugsweise o.a. Verbindungen von Mo, Ti, Cr, Ni, Co, Nb, V, Al, Ta, W, Zr, Hf, Fe, Mn, Ca, Si, B, C und N) einzeln oder in Kombination in die Reibflächen (4, 5, 14) der Sperrbüchse (3) und/oder Sperrhülse (2) eingeschmolzen werden.

6. Rückstromsperre nach Anspruch 1 bis 5, **dadurch gekennzeichnet, daß** Zusatzwerkstoffe wie Metalle, Carbide, Carbonitride, Boride, Carboboride, Silizide, Sulfide und/oder Oxide (vorzugsweise o.a. Verbindungen von Mo, Ti, Cr, Ni, Co, Nb, V, Al, Ta, W, Zr, Hf, Fe, Mn, Ca, Si, B, C und N) einzeln oder in Kombination in die Dichtflächen der Sperrbüchse (3) und/oder Sperrhülse (2) eingeschmolzen werden.

7. Verfahren zur Herstellung einer Rückstromsperre nach einem der Ansprüche 1 bis 6, wobei auf den Reibflächen der Schneckenspitze (8) und/oder den Reib- oder Dichtflächen der Sperrbüchse (3) und/oder der Sperrhülse (2) metallische, hartmetallische oder keramische Randschichten erzeugt werden, die von einer schmelzmetallurgischen Verbindung zwischen dem jeweiligen Grundkörper und einem zugeführten oder vordeponierten Zusatzwerkstoff gebildet werden, **dadurch gekennzeichnet, daß** ein Grundkörper aus Stahlwerkstoff mit mindestens 12% Chromanteil, einer Zugfestigkeit von mindestens 800 N/mm² und einer Kerbschlagarbeit von mindestens 50 Joule bei 20°C (Charpy V-Probe) eingesetzt wird, daß die zu bearbeitende Fläche mittels einer Energiequelle mit einer auf den Grundkörper einwirkenden örtlich-mittleren Leistungsdichte von mehr als 10³ Watt/cm² lokal aufgeschmolzen wird, wobei die maximale Schmelzbadspitzentemperatur mindestens 1700°C beträgt und Volumselemente in jenen Zonen des Grundkörpers, welche am fertigen Teil Reib- oder Dichtflächen bilden, kürzer als 20 Sec. im schmelzflüssigen Zustand sind und während dieser Zeit im Schmelzbad hochschmelzende Zusatzstoffe oder Mischungen von hochschmelzenden Zusatzstoffen weitgehend homogen verteilt werden, sodaß sich in der nachfolgenden Phase der Erstarrung eine Randschichte mit feinverteilten Hartstoffen bildet.

8. Verfahren nach Anspruch 7, **dadurch gekennzeichnet, daß** als Energiequelle eine oder mehrere Hochleistungsstrahlungsquelle(n), vorzugsweise ein oder mehrere Hochleistungslaser, eingesetzt wird (werden).

9. Verfahren nach Anspruch 8, **dadurch gekennzeichnet, daß** mindestens ein Laserstrahl die Reib- bzw. Dichtfläche (4, 5, 6, 14) unter einem Winkel von 5°-85°, vorzugsweise zwischen 55°-85° zur Flächennormalen trifft.

10. Verfahren nach Anspruch 8 und 9, **dadurch gekennzeichnet, daß** der zur Einfallsebene parallel polarisierte Anteil des Laserstrahles mehr als 60% beträgt.

11. Verfahren nach einem der Ansprüche 8 bis 10, **dadurch gekennzeichnet, daß** die räumliche und zeitliche Leistungsverteilung der auf den Grundkörper gerichteten Laserstrahlung gezielt einstellbar ist.

12. Verfahren nach einem der Ansprüche 7 bis 11, **dadurch gekennzeichnet, daß** als Grundkörper für die Schneckenspitze (8) die Sperrhülse (2) und/oder die Sperrbüchse (3) Eisenbasiswerkstoffe, vorzugsweise in den Zusammensetzungen 1.2316 (X36 CrMo 17), 1.2085 (X33 CrS 16), 1.2361 (X91 CrMoV 18), 1.4104 (X14 CrMoS 17), 1.4105 (X4 CrMoS 18), 1.4112 (X90 CrMoV 18), 1.4122 (X35 CrMo 17), 1.4528 (X105 CrCoMo 18 2), 1.2379 (X155 CrVMo 121), (X39 CrMo 17 1), (X190 CrVMoW 20 4 1) eingesetzt werden

13. Verfahren nach einem der Ansprüche 7 bis 11, **dadurch gekennzeichnet, daß** als Grundkörper für die Schneckenspitze (8) die Sperrhülse (2) und/oder die Sperrbüchse (3) schmelz- bzw. pulvermetallurgischen Werkstoffe auf Kobaltbasis- oder Nickelbasis eingesetzt werden.

14. Verfahren nach einem der Ansprüche 7 bis 11, **dadurch gekennzeichnet, daß** als Grundkörper für die die Sperrhülse (2) und/oder die Sperrbüchse (3) keramische Werkstoffe eingesetzt werden.

15. Verfahren nach einem der Ansprüche 7 bis 14, **dadurch gekennzeichnet, daß** als Zusatzwerkstoffe Metalle, Carbide, Nitride, Carbonitride, Boride, Sulfide, Carboboride, Silizide und Oxide einzeln oder in Kombination eingesetzt werden, vorzugsweise Mo, Ti, Cr, Ni, Co, Nb, V, Al, Ta, W, Zr, Hf, Fe, Mn, Ca, Si, B, C, N und deren o.a. Verbindungen.

16. Verfahren nach einem der Ansprüche 7 bis 15, **dadurch gekennzeichnet, daß** Substanzen, welche Schwefel, Sauerstoff, Selen und/oder Tellur enthalten, auf den Reib- bzw. Dichtflächen (4, 5, 6, 14) vordeponiert und/oder während des Einschmelzprozesses zugeführt werden.

17. Verfahren nach einem der Ansprüche 7 bis 16, **dadurch gekennzeichnet, daß** der Zusatzwerkstoff als Pulver, Massivdraht, Fülldraht, Paste oder Band vordeponiert und/oder während des Einschmelzprozesses zugeführt wird.

18. Verfahren nach einem der Ansprüche 7 bis 16, **dadurch gekennzeichnet, daß** der Zusatzwerkstoff in kombinierter Weise als Pulver, Massivdraht, Fülldraht, Band bzw. Paste vordeponiert und/oder während des Einschmelzprozesses zugeführt wird.

19. Verfahren nach einem der Ansprüche 7 bis 18, **dadurch gekennzeichnet, daß** während des Einschmelzprozesses eine vorbestimmte Atmosphäre eingestellt wird, indem entweder die Schneckenspitze (8) die Sperrhülse (2) und/oder die Sperrbüchse (3) in einer von der Umgebungsatmosphäre abgeschlossenen Kammer bearbeitet wird, oder indem die Schneckenspitze (8), die Sperrhülse (2) und/oder die Sperrbüchse (3) in Umgebungsatmosphäre von einem oder mehreren Gasstrahlen in ausgewählten Zusammensetzungen angeströmt wird.

20. Verfahren nach Anspruch 19, **dadurch gekennzeichnet, daß** zur Einstellung einer definierten Atmosphäre und zur Zusatzwerkstoffzufuhr eine Doppeldüse (7) mit einem Innenrohr (9) und einem Außenrohr (10) verwendet wird, wobei Pulver- und/oder Drahtwerkstoff durch das innere Rohr (9) geführt wird und das innere und äußere Rohr (10) von gleichen oder unterschiedlichen Prozeßgasen durchströmt werden.

21. Verfahren nach einem der Ansprüche 7 bis 20, **dadurch gekennzeichnet, daß** als Prozeßgase Edelgase, vorzugsweise Argon, oder reaktiv wirkende Gase, vorzugsweise Stickstoff, einzeln oder in Mischungen eingesetzt werden, denen zusätzlich weitere Gase, vorzugsweise Sauerstoff, in geringen Mengen zugesetzt werden.

22. Verfahren nach einem der Ansprüche 7 bis 18, **dadurch gekennzeichnet, daß** die Einschmelzung der Zusatzstoffe in die Reib- und/oder Dichtflächen (4, 5, 6, 14) in einer oder in mehreren Kreisbahnen und/oder in einer oder in mehreren geraden Bahnen oder in Raumkurven, vorzugsweise Spiralen, und/od. in Punktmustern erfolgt.

23. Verfahren nach einem der Ansprüche 7 bis 22, **dadurch gekennzeichnet, daß** nach erfolgter Erstarrung der Randschichte die Schneckenspitze (8), die Sperrhülse (2) und/oder die Sperrbüchse (3) einer spanabhebenden Bearbeitung unterzogen wird.

24. Verfahren nach Anspruch 23, **dadurch gekennzeichnet, daß** an der Schneckenspitze (8) seitliche Aussparungen, welche die Durchströmquerschnitte zwischen den Flügeln (16) der Schneckenspitze (8) ergeben, durch mechanische Bearbeitung, vorzugsweise durch Fräsen, Schleifen und/oder Drehen ausgearbeitet werden.

25. Verfahren nach einem der Ansprüche 7 bis 23, **dadurch gekennzeichnet, daß** eine Wärmebehandlung der Schneckenspitze (8), der Sperrbüchse (3) und/oder der Sperrhülse (2), vorzugsweise Weichglühen nach der Laserbehandlung und Härten und Anlassen oder Aushärten nach der mechanischen Bearbeitung erfolgt.

26. Verfahren nach einem der Ansprüche 7-25, **dadurch gekennzeichnet, daß** als Grundwerkstoff für die Schneckenspitzen (8) der Eisenbasiswerkstoff 1.2316.05 (X36 Cr Mo 17 V) eingesetzt wird.

27. Verfahren nach einem der Ansprüche 7-26, **dadurch gekennzeichnet, daß** als Grundwerkstoff für die Sperrbüchse (3) die Eisenbasiswerkstoffe 1.2379 (X155 CrVMo 12 1), 1.3243 (HS 6-5-2-5) oder (X190 CrVMoW 20 4 1) eingesetzt werden.

28. Verfahren nach einem der Ansprüche 7-27, **dadurch gekennzeichnet, daß** als Grundwerkstoff für die Sperrhülse (2) der Eisenbasiswerkstoff 1.4528 (X105 Cr Co Mo 18 2) eingesetzt wird.

29. Verfahren nach einem der Ansprüche 7-28, **dadurch gekennzeichnet, daß** als Zusatzwerkstoff eine Pulvermischung bestehend aus VC, Ti und MnS eingesetzt wird.

## Claims

1. A backflow blocking arrangement for an injection unit of an injection molding machine having a screw cylinder with a plasticising screw (1), at the front end of which is arranged the backflow blocking arrangement comprising a screw tip (8), a blocking bush (3) and a blocking sleeve (2) with corresponding sealing and friction surfaces (4, 5, 6, 14), wherein at least a portion of at least one friction surface (4, 5, 14) of the screw tip (8), the blocking bush (3) and/or the blocking sleeve (2) is formed by a protective layer comprising a fusion-metallurgical compound between the respective base body and a supplied or pre-deposited additive material, **characterised in that** at least the base body of the screw tip (8) comprisesaahromium-bearing steel material with an at least 12 % chrome proportion and additive materials such as metals, carbides, carbonitrides, borides, carboborides, silicides, sulfides and/or oxides, preferably compounfds of Mo, Ti, Cr, Ni, Co, Nb, V, Al, Ta, W, Zr, Hf, Fe, Mn, Ca, Si, B, C and N are fused in individually or in combination at least at the friction surfaces (14) of the screw tip (8), wherein between the base body and the outer zone treated with the additive materials there is mixed zone which is thinner than the outerzone treated with the additive materials and both zones comprise the base body material and specific proportions of the additives, and that said two zones are made up from metallic mixed crystals and chemical compounds, preferably carbides of the types MC₁₋ₓ, M₂C, M₆C, M₇C₃ and borides of the types M₂B and M₆B, which contain substances of the base body and/or the additive materials, where the said phases in the outer zone and the mixed zone are set in defined concentration relationships.

2. A backflow blocking arrangement as set forth in claim 1 **characterised in that** the base bodies of the screw tip (8) and/or the blocking bush (3) and/or the blocking sleeve (2) comprise iron-based materials, preferably of the compositions 1.2316 (X36 CrMo 17), 1.2085 (X33 CrS 16), 1.2361 (X91 CrMoV 18), 1.4104 (X14 CrMoS 17), 1.4105 (X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1).

3. A backflow blocking arrangement as set forth in claim 1 **characterised in that** the base bodies of the screw tip (8), the blocking bush (3) and/or the blocking sleeve (2) comprise fusion-metallurgical or powder-metallurgical cobalt-based or nickel-based materials.

4. A backflow blocking arrangement as set forth in claim 1 **characterised in that** the base bodies of the blocking bush (3) and/or the blocking sleeve (2) comprise ceramic or hard-metallic materials.

5. A backflow blocking arrangement as set forth in claims 1 through 5 **characterised in that** additive materials such as metals, carbides, carbonitrides, borides, carboborides, silicides, sulfides and/or oxides (preferably above-mentioned compounds of Mo, Ti, Cr, Ni, Co, Nb, V, Al, Ta, W, Zr, Hf, Fe, Mn, Ca, Si, B, C and N), individually or in combination, are fused into the friction surfaces (4, 5, 14) of the blocking bush (3) and/or the blocking sleeve (2).

6. A backflow blocking arrangement as set forth in claims 1 through 5 **characterised in that** additive materials such as metals, carbides, carbonitrides, borides, carboborides, silicides, sulfides and/or oxides (preferably above-mentioned compounds of Mo, Ti, Cr, Ni, Co, Nb, V, Al, Ta, W, Zr. Hf, Fe, Mn, Ca, Si, B, C and N), individually or in combination, are fused into the sealing surfaces of the blocking bush (3) and/or the blocking sleeve (2).

7. A process for the production of a backflow blocking arrangement as set forth in one of claims 1 through 6 wherein produced on the friction surfaces of the screw tip (8) and/or the friction or sealing surfaces of the blocking bush (3) and/or the blocking sleeve (2) are metallic, hard-metallic or ceramic boundary layers which are formed by a fusion-metallurgical compound as between the respective base body and a supplied or pre-deposited additive material, **characterised in that** a base body of steel material with an at least 12% chrome proportion, a tensile strength of at least 800 N/mm² and a notched-bar impact energy of at least 50 Joules at 20° (Charpy V-testpiece) is used, that the surface to be processed is locally fused on by means of an energy source with a locally-average power density acting on the base body of more than 10³ watts/cm³, wherein the maximum molten bath peak temperature is at least 1700°C and elements of volume in those zones of the base body which form friction or sealing surfaces on the finished part are in a molten condition for a shorter period than 20 seconds and during that time high-melting point additives or mixtures of high-melting point additives are substantially homogenously distributed in the molten bath so that a boundary layer with finely distributed hard substances is formed in the subsequent hardening phase.

8. A process as set forth in claim 7 **characterised in that** one or more high-power radiation sources, preferably one or more high-power lasers, is or are used as the energy source.

9. A process as set forth in claim 8 **characterised in that** at least one laser beam hits the friction or sealing surface (4, 5, 6, 14) at an angle of 5° - 85°, preferably between 55° and 85°, to the normal to the surface.

10. A process as set forth in claim 8 and claim 9 **characterised in that** the proportion of the laser beam which is polarised in parallel relationship with respect to the plane of incidence is more than 60%.

11. A process as set forth in one of claims 8 through 10 **characterised in that** the power distribution in respect of space and time of the laser radiation which is directed onto the base body is specifically adjustable.

12. A process as set forth in one of claims 7 through 11 **characterised in that** iron-based materials, preferably of the compositions 1.2316 (X36 CrMo 17), 1.2085 (X33 CrS 16), 1.2361 (X91 CrMoV 18), 1.4104 (X14 CrMoS 17), 1.4105 (X4 CrMoS 18), 1.4112 (X90 CrMaV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1) are used as the base bodies for the screw tip (8), the blocking sleeve (2) and/or the blocking bush (3).

13. A process as set forth in one of claims 7 through 11 **characterised in that** fusion-metallurgical or powder-metallurgical cobalt-based or nickel-based materials are used as the base bodies for the screw tip (8), the blocking sleeve (2) and/or the blocking bush (3).

14. A process as set forth in one of claims 7 through 11 **characterised in that** ceramic materials are used as the base bodies for the blocking sleeve (2) and/or the blocking bush (3).

15. A process as set forth in one of claims 7 through 14 **characterised in that** metals, carbides, nitrides, carbonitrides, borides, sulfides, carboborides, silicides and oxides, individually or in combination are used as the additive materials, preferably Mo, Ti, Cr, Ni, Co, Nb, V, Al, Ta, W, Zr, Hf, Fe, Mn, Ca, Si, B, C, N and their above-mentioned compounds.

16. A process as set forth in one of claims 7 through 15 **characterised in that** substances which contain sulfur, oxygen, selenium and/or tellurium are pre-deposited on the friction or sealing surfaces (4, 5, 6, 14) and/or are supplied thereto during the fusing-in procedure.

17. A process as set forth in one of claims 7 through 16 **characterised in that** the additive material is pre-deposited and/or supplied during the fusing-in procedure in the form of powder, solid wire, filler wire, paste or strip.

18. A process as set forth in one of claims 7 through 16 **characterised in that** the additive material is pre-deposited and/or supplied during the fusing-in procedure in a combined fashion in the form of powder, solid wire, filler wire, strip or paste.

19. A process as set forth in one of claims 7 through 18 **characterised in that** a predetermined atmosphere is set during the fusing-in procedure insofar as either the screw tip (8), the blocking sleeve (2) and/or the blocking bush (3) is processed in a chamber which is closed off from the ambient atmosphere or insofar as the screw tip (8), the blocking sleeve (2) and/or the blocking bush (3) in the ambient atmosphere have one or more gas jets of selected compositions flowing thereagainst.

20. A process as set forth in claim 19 **characterised in that** a double nozzle (7) comprising an inner tube (9) and an outer tube (10) is used for setting a defined atmosphere and for the additive material supply, wherein powder and/or wire material is guided through the inner tube (9) and the inner and outer tube (10) have identical or different process gases flowing therethrough.

21. A process as set forth in one of claims 7 through 20 **characterised in that** inert gases, preferably argon, or reactively acting gases, preferably nitrogen, are used individually or in mixtures as process gases, to which further gases, preferably oxygen, are additionally added in small amounts.

22. A process as set forth in one of claims 7 through 18 **characterised in that** the operation of fusing the additives into the friction and/or sealing surfaces (4, 5, 6, 14) is effected in one or more circular paths and/or one or more straight paths or in three-dimensional curves, preferably spirals, and/or in point patterns.

23. A process as set forth in one of claims 7 through 22 **characterised in that** after hardening of the boundary layer has taken place the screw tip (8), the blocking sleeve (2) and/or the blocking bush (3) is subjected to a cutting machining operation.

24. A process as set forth in claim 23 **characterised in that** lateral openings which afford the through-flow cross-sections between the blades (16) of the screw tip (8) are produced at the screw tip (8) by mechanical machining, preferably by milling, grinding and/or turning.

25. A process as set forth in one of claims 7 through 23 **characterised in that** a heat treatment of the screw tip (8), the blocking bush (3) and/or the blocking sleeve (2) is effected, preferably by soft annealing after the laser treatment and hardening and tempering or age-hardening after the mechanical machining operation.

26. A process as set forth in one of claims 7 through 25 **characterised in that** the iron-based material 1.2316.05 (X36 Cr Mo 17 V) is used as the base material for the screw tips (8).

27. A process as set forth in one of claims 7 through 26 **characterised in that** the iron-based materials 1.2379 (X155 CrVMo 12 1), 1.3243 (HS 6-5-2-5) or (X190 CrVMoW 20 4 1) are used as the base material for the blocking bush (3).

28. A process as set forth in one of claims 7 through 27 **characterised in that** the iron-based material 1.4528 (X105 CrCoMo 18 2) is used as the base material for the blocking sleeve (2).

29. A process as set forth in one of claims 7 through 28 **characterised in that** a powder mixture comprising VC, Ti and MnS is used as the additive material.

## Revendications

1. Dispositif de blocage du reflux pour une unité d'injection d'une machine à mouler par injection avec un cylindre de vis comportant une vis préplastificatrice (1) à l'extrémité avant de laquelle est placé le dispositif de blocage du reflux se composant d'une pointe de vis (8), d'une boite de blocage (3) et d'une douille de blocage (2) avec des surfaces correspondantes d'étanchéité et de frottement (4, 5, 6, 14), au moins une partie d'au moins une surface de frottement (4, 5, 14) de la pointe de vis (8), de la boite de blocage (3) et/ou de la douille de blocage (2) étant constituée d'une couche de protection réalisée en une liaison de pyrométallurgie entre le corps de base respectif et un matériau additionnel rapporté ou déposé préalablement, **caractérisé en ce qu'**au moins le corps de base de la pointe de vis (8) se compose d'un acier au chrome avec au moins une portion de chrome de 12%, et qu'au moins sur les surfaces de frottement (14) de la pointe de vis (8) des matériaux additionnels, tels que des métaux, des carbures, des carbonitrures, des borures, des carboborures, des siliciures, des sulfures et/ou des oxydes, de préférence des composés de Mo, Ti, Cr, Ni, Co, Nb, V, Al, Ta, W, Zr, Hf, Fe, Mn, Ca, Si, B, C et N, sont fondus individuellement ou en combinaison, une zone mixte plus mince que la zone superficielle traitée avec les matériaux additionnels se trouvant entre le corps de base et la zone superficielle traitée avec les matériaux additionnels et les deux zones se composant du matériau du corps de base ainsi que de portions ciblées des matériaux additionnels et **en ce que** ces deux zones sont composées de cristaux mixtes métalliques et de composés chimiques, de préférence des carbures des types MC_{1-X}, M₂C, M₆C, M₇C₃ et de borides des types M₂B et M₆B, qui contiennent des matériaux du corps de base et/ou des matériaux additionnels, les phases indiquées étant réglées avec des rapports de concentration définis dans la zone superficielle et dans la zone mixte.

2. Dispositif de blocage du reflux selon la revendication 1, **caractérisé en ce que** les corps de base de la pointe de vis (8) et/ou de la boite de blocage (3) et/ou de la douille de blocage (2) se composent de matériaux à base de fer, de préférence dans les composés 1.2316 (X36 CrMo 17), 1.2085 (X33 CrS 16), 1.2361 (X91 CrMoV 18), 1.4104 (X14 CrMoS 17), 1.4105(X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1).

3. Dispositif de blocage du reflux selon la revendication 1, **caractérisé en ce que** les corps de base de la pointe de vis (8), de la boite de blocage (3) et/ou de la douille de blocage (2) se composent de matériaux de pyrométallurgie ou de métallurgie des poudres à base de cobalt ou de nickel.

4. Dispositif de blocage du reflux selon la revendication 1, **caractérisé en ce que** les corps de base de la boîte de blocage (3) et/ou de la douille de blocage (2) se composent de matériaux céramiques ou de métaux durs.

5. Dispositif de blocage du reflux selon les revendications 1 à 5, **caractérisé en ce que** des matériaux additionnels, tels que des métaux, des carbures, des carbonitrures, des borures, des carboborures, des siliciures, des sulfures et/ou des oxydes (de préférence les composés susmentionnés de Mo, Ti, Cr, Ni, Co, Nb, V, Al, Ta, W, Zr, Hf, Fe, Mn, Ca, Si, B, C et N) sont fondus individuellement ou en combinaison dans les surfaces de frottement (4, 5, 14) de la boite de blocage (3) et/ou de la douille de blocage (2).

6. Dispositif de blocage du reflux selon les revendications 1 à 5, **caractérisé en ce que** des matériaux additionnels, tels que des métaux, des carbures, des carbonitrures, des borures, des carboborures, des siliciures, des sulfures et/ou des oxydes (de préférence les composés susmentionnés de Mo, Ti, Cr, Ni, Co, Nb, V, Al, Ta, W, Zr, Hf, Fe, Mn, Ca, Si, B, C et N) sont fondus individuellement ou en combinaison dans les surfaces d'étanchéité de la boîte de blocage (3) et/ou de la douille de blocage (2).

7. Procédé pour la fabrication d'un dispositif de blocage du reflux selon l'une des revendications 1 à 6, les surfaces de frottement de la pointe de vis (8) et/ou les surfaces de frottement ou les surfaces d'étanchéité de la boîte de blocage (3) et/ou de la douille de blocage (2) recevant des couches superficielles en métal, en métal dur ou en céramique qui sont constituées d'une liaison de pyrométallurgie entre le corps de base respectif et un matériau additionnel rapporté ou déposé préalablement, **caractérisé en ce qu'**un corps de base en acier avec au moins une portion de chrome de 12%, une résistance à la traction d'au moins 800 N/mm² et une énergie absorbée au choc d'au moins 50 Joules à 20°C (essai Charpy à entaille en V), est utilisé et **en ce que** la surface à traiter fait l'objet d'une fusion locale au moyen d'une source d'énergie avec une densité de puissance locale moyenne de plus de 10³ watts/cm² agissant sur le corps de base, la pointe maximale de la température du bain de fusion étant d'au moins 1700 °C et des éléments volumétriques étant, dans les zones du corps de base qui constituent des surfaces de frottement ou d'étanchéité sur la pièce finie, plus courts que 20 sec. en état de fusion et des matériaux additionnels à point de fusion élevé ou des mélanges de matériaux à point de fusion élevé étant, durant cette période, répartis de manière largement homogène dans le bain de fusion, ce qui provoque, lors de la phase suivante de la solidification, la formation d'une couche superficielle avec des matériaux à résistance mécanique élevée finement répartis.

8. Procédé selon la revendication 7, **caractérisé en ce qu'**une ou plusieurs source(s) de rayonnement à haute puissance, de préférence un ou plusieurs laser(s) à haute puissance, est (sont) utilisée(s) comme source d'énergie.

9. Procédé selon la revendication 8, **caractérisé en ce qu'**au moins un rayon laser touche la surface de frottement ou d'étanchéité (4, 5, 6, 14) avec un angle d'incidence de 5°-85°, de préférence entre 55°-85° par rapport à la normale de surface.

10. Procédé selon les revendications 8 et 9, **caractérisé en ce que** la portion du rayon laser polarisé parallèlement au niveau d'incidence est supérieure à 60%.

11. Procédé selon l'une des revendications 8 à 10, **caractérisé en ce que** la répartition dans l'espace et dans le temps de la puissance du rayonnement laser dirigé sur le corps de base peut être réglée de manière ciblée.

12. Procédé selon l'une des revendications 7 à 11, **caractérisé en ce que**, comme corps de base pour la pointe de vis (8), la douille de blocage (2) et/ou la boîte de blocage (3), on utilise des matériaux à base de fer, de préférence dans les composés 1.2316 (X36 CrMo 17), 1.2085 (X33 CrS 16), 1.2361 (X91 CrMoV 18), 1.4104 (X14 CrMoS 17), 1.4105(X4 CrMoS 18), 1.4112 (X90 CrMoV 18), 1.4122 (X35 CrMo 17), 1.4528 (X105 CrCoMo 18 2), 1.2379 (X155 CrVMo 12 1), (X39 CrMo 17 1), (X190 CrVMoW 20 4 1).

13. Procédé selon l'une des revendications 7 à 11, **caractérisé en ce que**, comme corps de base pour la pointe de vis (8), la douille de blocage (2) et/ou la boîte de blocage (3), on utilise des matériaux de pyrométallurgie ou de métallurgie des poudres à base de cobalt ou de nickel.

14. Procédé selon l'une des revendications 7 à 11, **caractérisé en ce que**, comme corps de base pour la douille de blocage (2) et/ou la boîte de blocage (3), on utilise des matériaux céramiques.

15. Procédé selon l'une des revendications 7 à 14, **caractérisé en ce que**, comme matériaux auxiliaires, on utilise individuellement ou en combinaison des métaux, des carbures, des nitrures, des carbonitrures, des borures, des sulfures, des carboborures, des siliciures et des oxydes, de préférence Mo, Ti, Cr, Ni, Co, Nb, V, Al, Ta, w, Zr, Hf, Fe, Mn, Ca, Si, B, C, et N et leurs composés susmentionnés.

16. Procédé selon l'une des revendications 7 à 15, **caractérisé en ce que** des substances contenant du soufre, de l'oxygène, du sélénium et/ou du tellure sont déposées préalablement et/ou rapportées lors du processus de fusion sur les surfaces de frottement ou d'étanchéité (4, 5, 6, 14).

17. Procédé selon l'une des revendications 7 à 16, **caractérisé en ce que** le matériau additionnel est déposé préalablement et/ou rapporté lors du processus de fusion sous forme de poudre, de fil massif, de fil fourré, de pâte ou de bande.

18. Procédé selon l'une des revendications 7 à 16, **caractérisé en ce que** le matériau additionnel est déposé préalablement et/ou rapporté lors du processus de fusion d'une manière combinée sous forme de poudre, de fil massif, de fil fourré, de bande ou de pâte.

19. Procédé selon l'une des revendications 7 à 18, **caractérisé en ce que**, lors du processus de fusion, une atmosphère prédéfinie est mise en place, soit par le fait que la pointe de vis (8), la douille de blocage (2) et/ou la boite de blocage (3) sont traités dans une chambre isolée de l'atmosphère ambiante, soit par le fait que la pointe de vis (8), la douille de blocage (2) et/ou la boîte de blocage (3) sont traités dans l'atmosphère ambiante par un ou plusieurs jets de gaz dans des combinaisons sélectionnées.

20. Procédé selon la revendication 19, **caractérisé en ce qu'**un injecteur double (7) avec un tube intérieur (9) et un tube extérieur (10) est utilisé pour la réalisation d'une atmosphère définie et pour amener le matériau additionnel, le matériau sous forme de poudre et/ou de fil étant guidé à travers le tube intérieur (9) et le tube intérieur (9) ainsi que le tube extérieur (10) étant traversés de gaz de processus identiques ou différents.

21. Procédé selon l'une des revendications 7 à 20, **caractérisé en ce que**, comme gaz de processus, on utilise individuellement ou en combinaisons des gaz nobles, de préférence de l'argon, ou des gaz à action réactive, de préférence de l'azote, auxquels sont rajoutés en outre d'autres gaz en petites quantités, de préférence de l'oxygène.

22. Procédé selon l'une des revendications 7 à 18, **caractérisé en ce que** la fusion des matériaux additionnels dans les surfaces de frottement et/ou d'étanchéité (4, 5, 6, 14) a lieu en une ou en plusieurs trajectoires circulaires et/ou en une ou en plusieurs trajectoires rectilignes ou en courbes spatiales, de préférence en spirales, et/ou par points.

23. Procédé selon l'une des revendications 7 à 22, **caractérisé en ce qu'**après la solidification de la couche superficielle, la pointe de vis (8), la douille de blocage (2) et/ou la boite de blocage (3) sont soumises à un usinage par enlèvement de copeaux.

24. Procédé selon la revendication 23, **caractérisé en ce que** sur la pointe de vis (8) sont pratiqués par un usinage mécanique, de préférence par fraisage, par meulage et/ou par tournage, des évidements latéraux qui constituent les sections de passage pour l'écoulement entre les ailes (16) de la pointe de vis (8).

25. Procédé selon l'une des revendications 7 à 23, **caractérisé en ce qu'**un traitement thermique, de préférence un recuit, de la pointe de vis (8), de la boite de blocage (3) et/ou de la douille de blocage (2) a lieu après le traitement au laser et qu'un trempage et un revenu ou un durcissement par précipitation ont lieu après l'usinage mécanique.

26. Procédé selon l'une des revendications 7 à 25, **caractérisé en ce que** le matériau à base de fer 1.2316.05 (X36 Cr Mo 17 V) est utilisé comme matériau de base pour les pointes de vis (8).

27. Procédé selon l'une des revendications 7 à 26, **caractérisé en ce que** les matériaux à base de fer 1.2379 (X155 CrVMo 12 1), 1.3243 (HS 6-5-2-5) ou (X190 CrVMoW 20 4 1) sont utilisés comme matériaux de base pour la boite de blocage (3).

28. Procédé selon l'une des revendications 7 à 27, **caractérisé en ce que** le matériau à base de fer 1.4528 (X105 Cr Co Mo 18 2) est utilisé comme matériau de base pour la douille de blocage (2).

29. Procédé selon l'une des revendications 7 à 28, **caractérisé en ce qu'**un mélange de poudres se composant de VC, de Ti et de MnS est utilisé comme matériau additionnel.
